# FASCICULE DE BREVET EUROPEEN

(11) **EP 3 453 294 B1**
(45) Date de publication et mention de la délivrance du brevet: **27.08.2025**
(21) Numéro de dépôt: 18192785.6
(22) Date de dépôt: 05.09.2018
(51) Int. Cl.: A47J 47/02, B65D 43/02

(54) **USTENSILE DE CUISINE**
KÜCHENARTIKEL
KITCHEN ITEM

(30) Priorité: 06.09.2017 FR 1758230
(43) Date de publication de la demande: 13.03.2019
(73) Titulaire: International Cookware, 36000 Châteauroux (FR)
(72) Inventeur: Oliveira, Alvaro de, 94300 Vincennes (FR)
(74) Mandataire: Cabinet Netter

(56) Documents cités:
- WO-A1-00/64772
- WO-A2-01/51362
- FR-A3- 2 786 471
- US-A- 6 092 687

## Description

L'invention a trait à un ustensile de cuisine du type comprenant un couvercle en matière plastique dont la forme correspond à celle d'un récipient en verre, et un système de fermeture apte à maintenir le couvercle sur le récipient en un engagement mutuel dans lequel une partie du couvercle est en appui contre un bord libre du récipient.

Les ustensiles de ce type sont utilisés en combinaison du récipient en verre pour former une boîte de conservation, pratiquement hermétique.

On connaît des ustensiles de ce type dont le système de fermeture comprend un joint d'étanchéité installé dans le couvercle. Le joint prend la forme d'un cordon qui s'étend selon un contour correspondant à celui du bord libre du récipient. Typiquement, le cordon est logé dans une rainure ménagée dans l'épaisseur du couvercle. Le couvercle et le cordon sont agencés de telle manière que le cordon vienne coiffer le bord libre du récipient lorsque le couvercle est positionné sur une ouverture du récipient.

Le système de fermeture comprend alors en outre des rabats, articulés sur le couvercle, qui sont agencés de manière à venir en prise sous une partie du récipient adjacente au bord libre, à l'extérieur du récipient. Les rabats sont conformés de manière à serrer le couvercle contre le bord libre du récipient lorsque les rabats sont en prise. Il résulte de ce serrage une compression du joint d'étanchéité, entre le couvercle et le bord libre, qui rend l'engagement du couvercle sur le récipient pratiquement hermétique.

Les rabats sont généralement réalisés en matière plastique. Les rabats sont généralement venus de matière avec le reste du couvercle. À force d'utilisation, les rabats se déforment en sorte que le serrage produit par ces rabats tend à s'affaiblir. Au contraire, dans les premières utilisations, il faut forcer sur les rabats pour les mettre en prise.

Peu à peu, ces couvercles à rabats font place à des couvercle d'un type différent, dans lequel le système de fermeture comporte une lèvre périphérique solidaire du couvercle et qui fait saillie de celui-ci. Cette lèvre périphérique a fonction d'étanchéité.

La lèvre périphérique présente un profil conformé de telle manière qu'une portion de la lèvre se replie contre une paroi latérale intérieure du récipient, sous le bord libre du récipient, lorsque le couvercle vient en appui contre ce bord. Il en résulte un engagement mutuel du couvercle et du récipient dont l'étanchéité est réalisée entre la paroi latérale du récipient et le couvercle, plutôt qu'entre le bord libre du récipient et ce couvercle.

Le maintien de cet engagement mutuel du récipient est réalisé par l'adhérence de la lèvre repliée contre la paroi latérale interne du récipient. Pour garantir une adhérence suffisante, y compris en présence de corps gras sur la paroi latérale, on tire profit du fait la paroi latérale du récipient est généralement évasée, i.e. s'étend depuis le fond du récipient en s'écartant d'une direction normale au fond vers l'extérieur. On prévoit que la lèvre périphérique fasse saillie du couvercle de telle sorte qu'elle vienne en contact, avec la surface latérale interne du récipient, assez loin du bord libre de celui-ci. Autrement dit, le contact entre la lèvre et la paroi latérale interne du récipient se fait profondément pour garantir le maintien du couvercle dans son engagement avec le récipient. Ainsi, la lèvre est plus repliée et sur une plus grande partie d'elle-même, ce qui augmente l'adhérence. Cette configuration s'accompagne toutefois d'une diminution du volume utile du récipient.

Un tel récipient de l'état de l'art est divulgué dans WO01/51362 A2.

La Demanderesse s'est fixée pour objectif d'améliorer la situation.

Elle propose un ustensile de cuisine du type comprenant un couvercle en matière plastique en correspondance de forme avec un récipient en verre, et un système de fermeture capable de maintenir le couvercle sur le récipient en un engagement mutuel dans lequel une partie du couvercle est en appui contre un bord libre du récipient. Le système de fermeture comprend au moins une lèvre périphérique, solidaire du couvercle, qui est repliée, en partie au moins, contre une paroi latérale du récipient lorsque le couvercle et le récipient sont mutuellement engagés. Le couvercle présente au moins une portion homologue d'au moins une portion du récipient qui fait saillie d'une partie au moins du bord libre, vers l'extérieur du récipient. Le système de fermeture comprend au moins un curseur avec une extrémité recourbée, monté à translation sur le couvercle, le curseur est déplaçable entre une première position où son extrémité recourbée se trouve à l'écart de la portion homologue du couvercle pour permettre l'engagement du couvercle et du récipient avec la portion homologue en regard de la portion en saillie du récipient, et une seconde position où l'extrémité recourbée du curseur est à proximité de la portion homologue pour engager la portion en saillie du récipient.

L'ustensile proposé peut s'engager de manière sure sur la face ouverte d'un récipient. L'ustensile peut être prévu de telle manière que la lèvre d'étanchéité fasse contact sur la paroi latérale du récipient, à proximité de son bord libre. Ceci permet de conserver le volume utile du récipient.

Cela permet aussi d'améliorer l'efficacité de la fermeture : la Demanderesse a ainsi constaté que plus on va profondément sur la paroi latérale interne, plus la probabilité est grande qu'il s'y trouve un corps gras. Enfin, on évite le repliement plus important de la lèvre périphérique, lequel s'accompagne généralement d'une mise en place contraignante du couvercle sur le récipient, qui nécessite des efforts plus importants de la part de l'utilisateur.

La Demanderesse propose également un kit formant ustensile de cuisine du type comprenant un récipient en verre, un couvercle en matière plastique en correspondance de forme avec le récipient en verre, et un système de fermeture capable de maintenir le couvercle sur le récipient en un engagement mutuel dans lequel une partie du couvercle est en appui contre un bord libre du récipient. Le système de fermeture comprenant au moins une lèvre périphérique, solidaire du couvercle, qui est repliée, en partie au moins, contre une paroi latérale du récipient lorsque le couvercle et le récipient sont mutuellement engagés. Le couvercle présente au moins une portion homologue d'au moins une portion du récipient qui fait saillie d'une partie au moins du bord libre, vers l'extérieur du récipient. Le système de fermeture comprend au moins un curseur avec une extrémité recourbée, monté à translation sur le couvercle, le curseur est déplaçable entre une première position où son extrémité recourbée se trouve à l'écart de la portion homologue du couvercle pour permettre l'engagement du couvercle et du récipient avec la portion homologue en regard de la portion en saillie du récipient, et une seconde position où l'extrémité recourbée du curseur est à proximité de la portion homologue pour engager la portion en saillie du récipient.

D'autres caractéristiques et avantages de l'invention apparaîtront à l'examen de la description détaillée ci-après, et des dessins annexés sur lesquels :
- la figure 1 représente un ustensile de cuisine en perspective éclatée ;
- la figure 2 représente l'ustensile de la figure 1 en vue de dessus ;
- la figure 3 représente une embase de l'ustensile de la figure 1, en vue de face ;
- la figure 4 représente l'embase de la figure 3, en coupe selon une ligne IV-IV ;
- la figure 5 représente partiellement l'ustensile de la figure 2, en coupe selon une ligne V-V ;
- la figure 6 est analogue à la figure 5, l'ustensile étant vu en coupe selon une ligne VI-VI ;
- la figure 7 est analogue à la figure 5, l'ustensile étant vu en coupe selon une ligne VII-VII ;
- la figure 8 représente une patte pour l'ustensile de la figure 1, vue en perspective ;
- la figure 9 représente la patte de la figure 8 en vue de dessus ;
- la figure 10 représente la patte de la figure 9, en coupe selon une ligne X-X ;
- la figure 11 représente la patte de la figure 9, en coupe selon une ligne XI-XI ;
- la figure 12 représente la patte de la figure 10, en coupe selon une ligne XII-XII ;
- la figure 13 représente une nervure pour l'ustensile de la figure 1, vue en coupe transversale ;
- la figure 14 représente une bague d'étanchéité pour l'ustensile de la figure 1, vue en coupe transversale ;
- la figure 15 représente une moitié de l'ustensile de la figure 1, en position sur un récipient, dans une première configuration, en coupe longitudinale ;
- la figure 16 est analogue à la figure 15, l'ustensile se trouvant dans une seconde configuration relativement au récipient ; et
- la figure 17 est analogue à la figure 15, l'ustensile et le récipient étant montrés en coupe transversale.

Les dessins annexés contiennent des éléments de caractère certain. Ils pourront non seulement servir à compléter l'invention, mais aussi contribuer à sa définition, le cas échéant.

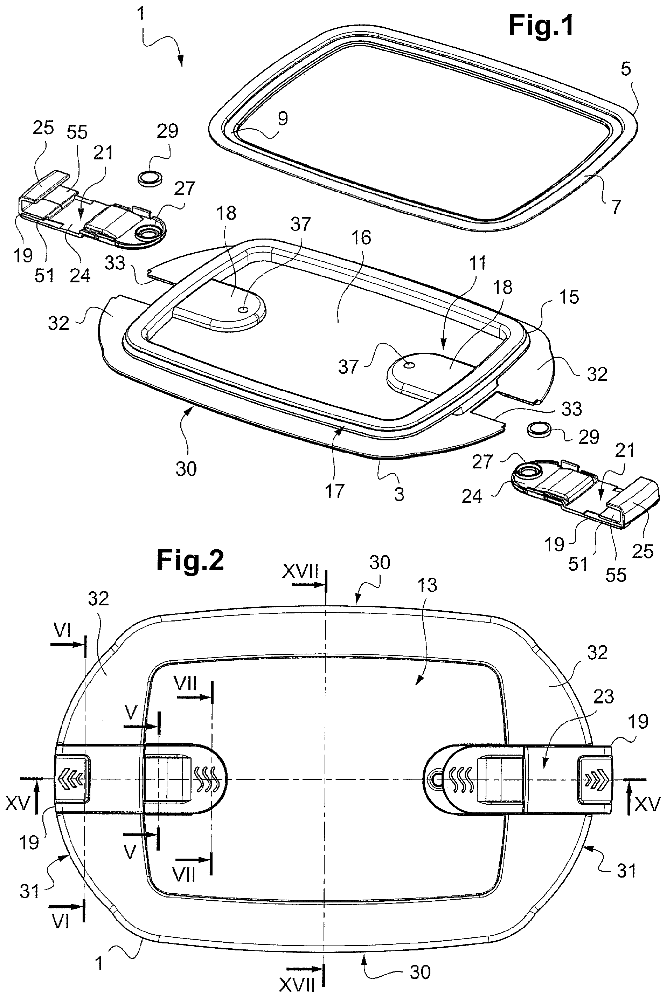

On fait référence aux figures 1 et 2.

Elles montrent un ustensile de cuisine sous la forme d'un couvercle 1 destiné à venir coiffer un récipient de verre non représenté.

Le couvercle 1 comprend une embase de couvercle 3 généralement plate dont le contour correspond au contour du récipient en verre auquel le couvercle 1 est destiné. Ici, l'embase 3 présente un contour d'allure généralement rectangulaire. L'embase 3 est par exemple réalisée en matière plastique.

Le couvercle 1 comprend en outre un anneau souple 5 qui se monte sur l'embase 3 du couvercle 1. À plat, l'anneau souple 5 s'étend selon un contour qui correspond généralement au contour de l'ouverture du récipient auquel le couvercle 1 est destiné. Ici, l'anneau souple 5 s'étend suivant un contour généralement rectangulaire.

L'anneau souple 5 comprend un bord extérieur conformé en une lèvre périphérique 7 et un bord intérieur auquel se rattache la lèvre périphérique 7. Le bord intérieur de l'anneau souple 5 est conformé en une portion de maintien 9.

L'embase 3 présente une première grande face, ou face inférieure 11, destinée à venir en regard de l'ouverture du récipient de verre. L'embase de couvercle 3 comprend en outre une seconde grande face, ou face supérieure 13, opposée à la face inférieure 11.

Le couvercle 1 comporte une première nervure 15 solidaire de l'embase 3. La première nervure 15 fait saillie de la face inférieure 11 de l'embase 3. La nervure 15 s'étend selon un contour fermé dont l'allure correspond au contour de l'ouverture du récipient de verre auquel le couvercle 1 est destiné. Ici, la première nervure 15 s'étend selon un contour généralement rectangulaire.

La nervure 15 présente une gorge périphérique 17 qui s'étend selon le contour de cette nervure 15. La section transversale de la gorge périphérique 17 correspond au profil de la portion de maintien 9 de l'anneau souple 5.

Le couvercle 1 comprend encore une paire de pattes 19 montées chacune à coulissement sur l'embase 3.

Chaque patte 19 présente une première grande face, ou face inférieure 21, et une seconde grande face, ou face supérieure 23, opposée à la face inférieure 21.

La face inférieure 21 est destinée à venir en regard d'une face supérieure du récipient en verre.

Chaque patte 19 présente un corps 24 généralement plat, avec un contour à l'allure générale rectangulaire, et une partie recourbée 25 qui fait saillie de la face inférieure 21 de la patte 19. La partie recourbée 25 est solidaire du corps 24. Ici, la partie recourbée 25 s'attache au corps 24 sur un petit côté de celui-ci.

Chaque patte 19 présente un logement 27 adapté à recevoir un joint d'étanchéité 29, ici en forme générale de disque. Le logement 27 est ménagé sur la face inférieure 21 de chaque patte 19.

L'embase 3 présente un contour avec deux bords allongés 30 qui s'étendent parallèlement entre eux. Les bords allongés 30 sont reliés l'un à l'autre par deux bords transversaux 31 mutuellement opposés. Ici, les bords transversaux 31 s'étendent généralement en courbe. La courbure des bords transversaux 31 est telle qu'elle ménage dans l'embase 3 deux portions élargies par rapport à un contour rectangulaire. Ces portions élargies forment des portions favorables à la préhension du couvercle 1, ou portions de préhension 32. L'embase 3 présente une paire d'échancrures 33 ménagées chacune dans un bord transversal 31 respectif du contour de l'embase 3. Ici, les échancrures 33 sont généralement rectangulaires. Chaque échancrure 33 s'étend suivant son bord transversal 31 respectif d'une longueur qui correspond à la largeur d'une patte 19 respective. Les échancrures 33 sont ménagées dans une zone médiane de leur bord transversal 31 respectif.

Les pattes 19 sont montées sur l'embase 3 en les échancrures 33 avec possibilité de coulissement selon une première direction. Ici, la première direction correspond sensiblement à une direction longitudinale de l'embase 3. Chaque patte 19 peut être déplacée suivant cette première direction par rapport à l'embase 3 entre une première position, visible sur la gauche de la figure 2, où la partie recourbée 25 se trouve au-dessus d'une échancrure 33 et une seconde position, visible sur la droite de la figure 2, où la portion recourbée 25 fait saillie du bord transversal 31, vers l'extérieur de l'embase 3. Ici, l'extrémité de chaque patte 19 portant la partie recourbée 25 affleure le bord transversal 31 de l'embase 3 lorsque la patte se trouve en première position par rapport à cette embase 3.

La face inférieure 11 de l'embase 3 présente une portion centrale 16, bordée par la nervure 15. La face inférieure 11 de l'embase 3 présente deux portions en relief 18 allongées. Ces surfaces en saillie 18 sont disposées symétriquement l'une à l'autre par rapport à un plan transversal de l'embase 3. Elles s'étendent en regard chacune d'une échancrure 33 respectives. Les portions en relief 18 s'étendent selon la direction longitudinale de l'embase 3.

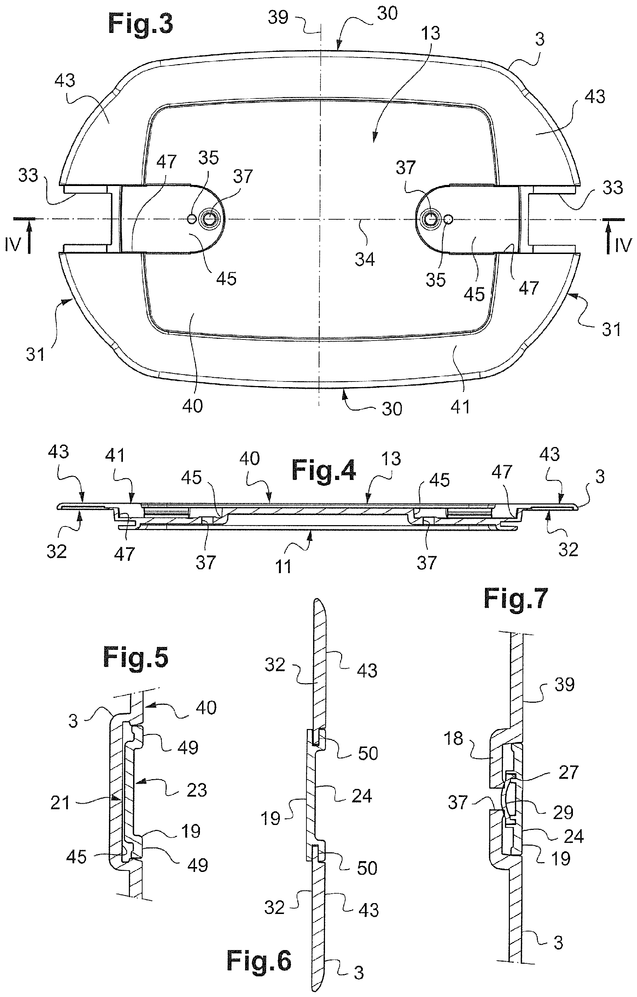

On fait référence aux figures 3 et 4.

Elles montrent l'embase 3 seule.

L'embase 3 présente un premier plan de symétrie, ou plan de symétrie longitudinal 34, perpendiculaire au plan principal de l'embase 3 et qui s'étend dans la direction longitudinale de l'embase 3.

L'embase 3 présente une paire d'évidements d'un premier type, ou premiers évidements 35. Chaque évidement 35 est conformé de manière à accueillir une partie au moins d'un joint d'étanchéité en forme de disque, typiquement le joint 29 de la figure 1. Chaque évidement 35 est conformé de façon à recevoir une partie d'un joint 29 respectif qui dépasse du logement 27 de ce joint 29 sur une patte 19.

L'embase 3 comprend en outre une paire d'orifice d'un premier type, ou premiers orifice 37, qui traverse une épaisseur de l'embase 3. La portion de chaque joint d'étanchéité 29 qui dépasse d'un logement 27 est conformée de manière à obturer au moins premier orifice 37 respectif. Chaque orifice 37 débouche sur la surface intérieure 11 en une portion en relief 18 respective. Chaque orifice 37 débouche sur la face extérieure 13 au centre d'un bossage (non référencé). Une partie basse de ce bossage ou une partie prolongeant celui-ci peut être prévue de manière adjacente à un évidement 35 respectif. Cela permet de créer une sorte de rampe sur laquelle peut glisser la partie du joint 29 qui fait saillie de son logement 27.

À chaque fois, un premier orifice 37 est ménagé à proximité d'un premier évidement 35. À chaque fois, un premier orifice 37 et son premier évidement 35 proximal sont proche de l'un des bords transversaux 31 et éloignés de l'autre. À chaque fois, un premier orifice 37 et son premier évidement 35 proximal se trouvent au milieu de la largeur de l'embase, au niveau de l'échancrure 33 d'un bord transversal 31 proximal. Les premiers évidements 35 et les premiers orifices 37 sont alignés les uns avec les autres selon la première direction, ici dans la longueur de l'embase 3.

Ici, chaque couple formé d'un premier orifice 37 et de son premier évidement 35 proximal se trouve en symétrie d'un couple homologue par rapport à un second plan de symétrie de l'embase 3, ou plan de symétrie transversal 39, perpendiculaire au plan principal de l'embase 3 et au plan de symétrie longitudinal. Les premiers évidements 35 et les premiers orifices 37 sont en outre disposés dans le plan de symétrie longitudinal 34.

La face supérieure 13 de l'embase 3 présente une portion centrale 40, dont le contour est ici généralement rectangulaire. La face supérieure 13 comprend encore une portion périphérique 41 qui borde la portion centrale 40. La portion périphérique 41 surplombe légèrement la partie centrale 40.

À chaque fois, entre un bord transversal 31 de l'embase 3 et la portion périphérique 41, l'embase 3 présente deux portions respectives, ou secondes portions de préhension 43, qui favorisent la préhension du couvercle 1. Ici, les secondes portions de préhension 43 se trouvent au niveau du reste de la portion périphérique 41. En variante, elles pourraient se trouver à un niveau légèrement inférieur. Chaque seconde portion de préhension 43 se trouve opposée en partie au moins à une première portion de préhension respective 32 de la face inférieure 11 et séparée de celle-ci par l'épaisseur de l'embase 3.

La face supérieure 13 de l'embase 3 présente en outre deux défonces 45 homologues, disposées symétriquement par rapport au plan de symétrie transversal 39. Chaque défonce 45 s'étend sur une partie de la portion centrale 40 et se prolonge sur une partie de la bordure périphérique 41 dans laquelle elle forme une échancrure 47. Chaque défonce 45 se situe dans le prolongement d'une échancrure 33 respective.

Chaque couple formé d'un premier orifice 37 et de son premier évidement 35 proximal est ménagé dans une défonce 45 respective. Les défonces 45 sont disposées chacune au-dessus d'une portion en relief 18 respective. Les défonces 45 de la face supérieure 13 de l'embase 3 sont opposées aux surfaces en saillie 18 suivant l'épaisseur de l'embase 3.

On fait référence à la figure 5.

Le corps 24 de chaque patte 19 est logé dans une défonce 45 respective. Chaque patte 19 présente au moins une paire d'ailettes 49 qui font saillie chacune d'un bord longitudinal respectif du corps 24. Les ailettes 49 guident la translation de la patte 19 sur les bords de la défonce 45.

La profondeur de la défonce 45 est telle que la face supérieure 23 de la patte 19 ne dépasse pas de la face supérieure 13 du couvercle 1, au moins au voisinage de cette défonce 45. Ici, la face supérieure 23 de la patte 19 affleure la face supérieure 13 du couvercle 1 au voisinage de la défonce 45.

On fait référence à la figure 6.

Le corps 24 de chaque patte 19 présente une paire de rainures latérales 51 s'étendant suivant la longueur du corps 24. Les rainures latérales 51 sont ménagées dans l'épaisseur du corps 24. Chaque rainure latérale 51 est ouverte sur un bord longitudinal respectif du corps 24. Chacune de ces rainures latérales 51 s'engage sur un bord de l'échancrure 33. Ici, chaque bord de l'échancrure 33 présente une nervure allongée 50 qui fait saillie à l'intérieur de la défonce 45 respective.

Les nervures 50 et les rainures 51 coopèrent de manière à compléter le guidage en translation de chacune des pattes 19 sur l'embase 3, le long d'une défonce 45 respective.

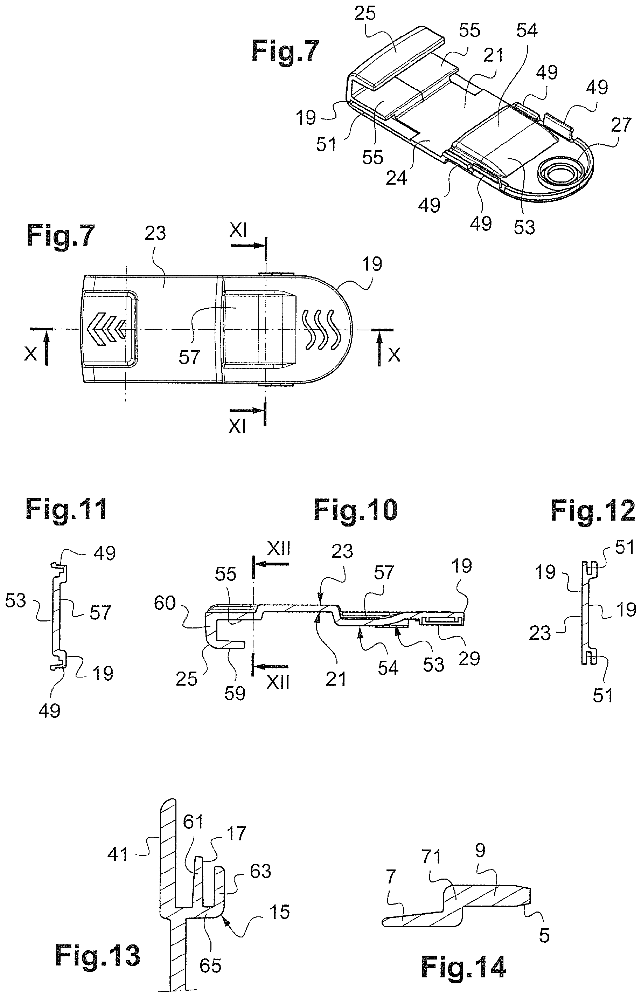

On fait référence à la figure 7.

Lorsqu'une patte 19 se trouve en première position par rapport à l'embase 3, le premier orifice 37 ménagé dans la défonce 45 correspondante coïncide avec une partie du joint 29 qui fait saillie de son logement 27. Cette partie en saillie obture le première orifice 37, d'une manière étanche aux gaz. La présence d'un bossage entourant le premier orifice 37 contribue au maintien de cette étanchéité. La face supérieure 23 de la patte 19 affleure la face supérieure 13 du couvercle 1.

On fait référence à la figure 8.

Elle montre une patte 19 isolée.

La face inférieure 21 de la patte 19 présente une surface en saillie agencée sous la forme d'une rampe 53 qui s'élève depuis une partie du corps 24 proche de l'extrémité de la patte 19 opposée à la partie recourbée 25 en direction de cette partie recourbée 25. La rampe 53 se prolonge en direction de la partie recourbée 25 en un plateau 54 correspondant à une surface en saillie qui s'étend parallèlement à un plan principal du corps 24.

Chaque ailette 49 fait en outre saillie de la surface inférieure 21 de la patte 19.

Chaque rainure latérale 51 est formée dans une épaisseur la patte 19, sous une portion 55 du corps 54 qui s'étend en regard de la portion recourbée 25.

On fait référence aux figures 9 et 11.

La face supérieure 23 de chaque patte 19 présente un second évidement, ou poussoir 57, conformé de manière à favoriser une poussée de la patte 19 au moyen d'un doigt. Le poussoir 57 se trouve opposé à la rampe 53 et au plateau 54 suivant l'épaisseur du corps 24 de la patte 19.

On fait référence à la figure 10.

La partie recourbée 25 comprend une première portion 59 qui s'étend parallèlement à la face inférieure 21 de la patte 19, i.e. à un plan principal du corps 24, et qui se raccorde au corps 24 sur la face inférieure 21 par l'intermédiaire d'une surface de raccordement 60. La surface de raccordement 60 s'étend ici de manière généralement perpendiculaire à la surface inférieure 21 ou au plan principal du corps 24. La partie recourbée 25 présente un profil en allure de crochet.

La portion de raccordement 60 correspond à une extrémité longitudinale de la patte 19 opposée au logement 27. Le corps 24 de chaque patte 19 présente une extrémité libre tandis que l'extrémité longitudinalement opposée à cette extrémité libre porte la partie recourbée 25.

On fait référence à la figure 12.

Les rainures 51 sont ouvertes sur les bords longitudinaux du corps 24, dans l'épaisseur de celui-ci.

On fait référence à la figure 13.

La nervure 15 se trouve sur la face inférieure 11 à l'opposé par rapport à l'épaisseur de l'embase 3 d'une portion où se raccorde la partie centrale 40 et la partie périphérique 41 de la face supérieure 13.

La nervure 15 présente deux parois qui s'étendent parallèlement l'une à l'autre et à la face inférieure 11 de l'embase 3. Une première de ces parois 61 se trouve à proximité de la face interne 11 tandis que la seconde paroi 63 s'en trouve éloignée. La première paroi 61 et la seconde paroi 63 se raccordent chacune à une paroi traverse 65. Cette traverse 65 s'attache à la face intérieure 11 de l'embase 3 et fait saillie de cette dernière de manière généralement perpendiculaire à cette face. La première paroi 61 et la seconde paroi 63 délimitent entre elles la gorge périphérique 17 de la nervure 15.

On fait référence à la figure 14.

L'anneau souple 5 présente un bord extérieur 7 conformé en une lèvre périphérique et un bord intérieur conformé en une portion de maintien 9. La portion de maintien 9 et la gorge 17 sont mutuellement en correspondance.

La partie de maintien 9 et la lèvre périphérique 7 s'étendent généralement de manière parallèle l'une à l'autre. Elles s'étendent dans des plans principaux respectifs décalés l'un de l'autre, ici d'environ l'épaisseur de la portion de maintien 9. La lèvre périphérique 7 et la portion de maintien 9 se raccordent l'une à l'autre par une portion intermédiaire 71 de l'anneau souple 5 qui s'étend généralement perpendiculairement aux plans principaux de ces portions.

La portion réceptrice et la portion intermédiaire 71 présentent une épaisseur généralement constante, tandis que la portion de lèvre 7 présente une épaisseur qui diminue de la portion intermédiaire 71 en direction de son extrémité libre.

La partie de maintien 9 et la gorge 17 sont conformées de sorte que la partie réceptrice 9 s'engage dans cette gorge 9 jusqu'à ce que la portion intermédiaire 71 vienne buter contre l'une et/ou l'autre de la première paroi 61 et la seconde paroi 63 de la nervure 15.

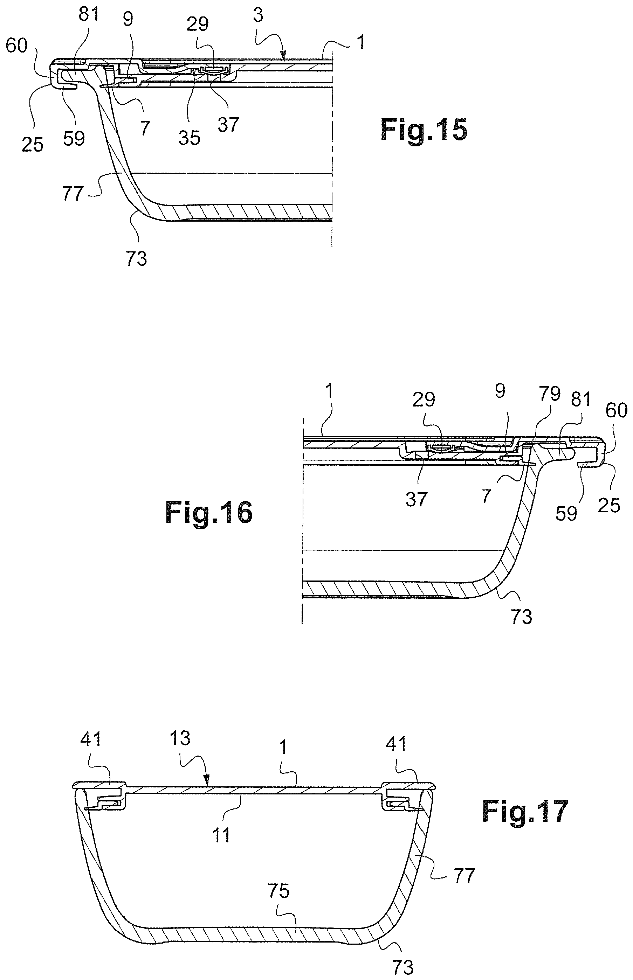

On fait référence aux figures 15 à 17.

Le couvercle 1 est positionné par rapport à un récipient de verre 73.

Le récipient de verre 73 est venu de matière. Il présente une grande face supérieure et une grande face inférieure, opposée à la face supérieure. Le récipient de verre 73 présente une paroi avec une portion qui forme un fond 75 généralement plat sur la face inférieure et une portion latérale 77 qui borde ce fond 75. Le récipient 73 est ouvert en face supérieure. Le récipient 73 présente un bord libre 79 autour de l'ouverture du récipient et qui termine la portion latérale 77. La portion latérale 77 s'évase à mesure qu'elle s'élève par rapport au fond 75. La portion latérale 77 s'écarte d'une direction perpendiculaire au fond 75 en s'éloignant de ce dernier.

Le récipient 73 comporte en outre une paire d'anses 81 qui font saillie de la portion latérale 77. Les anses 81 sont mutuellement opposées, ici par rapport à une direction longitudinale du récipient 73. Les anses 81 s'étendent ici généralement de manière parallèle au fond 75. Ici, les anses 81 s'étendent sensiblement en dessous du bord libre 79, le long d'une partie seulement de celui-ci. En variante, le récipient 73 peut comporter une anse 81 qui s'étend tout le long du bord libre 79.

Une partie de l'embase 3 du couvercle 1 comprise entre le bord de l'embase 30 et la nervure 15 se trouve en appui contre le bord libre 79 du récipient 73. Le couvercle 1 est engagé avec le récipient 73. La rainure 15^{e} trouve à l'intérieur du récipient 73.

La lèvre périphérique 7 de l'anneau souple 5 vient au contact de la paroi latérale 77, intérieurement à celle-ci et se replie de manière à former une étanchéité entre l'espace intérieur du récipient 73 et cette lèvre 7. Ce contact se fait assez haut, ici sensiblement au niveau d'une face inférieure des anses 81.

Sur la figure 16, la patte 19 se trouve en seconde position par rapport à l'embase.

Le bord recourbé 35 est éloigné de l'anse 81. Le couvercle 1 peut être installé dans sa position d'engagement sur le récipient 73. Dans cette seconde position de la patte, le joint 29 se trouve logé dans l'évidement 35. L'orifice 37 est libre. L'orifice 37 permet une égalisation des pressions entre l'intérieur du récipient 73 du côté de la face inférieure 11 de l'embase 3 et l'extérieur, du côté de la face supérieure 13 de celle-ci. Le dégagement de l'orifice 37 et la mise en seconde position d'une patte 19 se fait de manière simultanée, d'un seul geste.

Cette égalisation de pression simplifie grandement l'installation du couvercle 1 dans sa position d'engagement en supprimant tout effet de piston qui pourrait être provoqué du fait de l'étanchéité créée par le contact de lèvre 7 sur la face latérale 77.

Sur la figure 15, la patte 19 se trouve dans sa première position par rapport à l'embase 3.

La partie recourbée 25 est engagée avec l'anse 81. La partie formant l'anse 81 se trouve emprisonnée dans la partie recourbée 25 entre la première portion 59 et la portion de raccordement 61 de celle-ci.

L'engagement du couvercle 1 sur le récipient 73 est verrouillé. Le couvercle 1 est solidaire du récipient 73. La partie recourbée 25 empêche le retrait du couvercle 1 de sa position d'engagement sur le récipient 73.

Le joint 29 se trouve dans une position où il obture l'orifice 37. Le récipient 73 est fermé par le couvercle 1 hermétiquement. L'obturation de l'orifice 37 se fait simultanément au verrouillage du couvercle 1 sur le récipient 73, d'un seul geste.

Pour réchauffer le contenu du récipient 73, le couvercle 1 peut rester engagé sur le récipient 73 où il protège le four, notamment de type micro-onde, des projections du contenu du récipient. L'engagement maintient le couvercle en position. En translatant les pattes 19 de la première position à la seconde, on met l'intérieur du récipient 73 à l'échappement ce qui limite une surpression sous le couvercle 1. En complément, le couvercle est déverrouillé de sa position d'engagement, ce qui permet au couvercle de quitter cet engagement en cas de surpression due par exemple à un échappement insuffisant par les orifices 37.

Le joint d'étanchéité 29 et l'orifice 37 sont mutuellement positionnés de manière que le joint d'étanchéité 29 se trouve à l'écart de l'orifice 37 lorsque la patte respective 19 se trouve en première position.

On vient de décrire un couvercle 1 et un système de fermeture de celui-ci comprenant chacune des pattes 19. Chacune de celles-ci agit à la manière d'un curseur monté à translation sur le couvercle 1. Ce curseur se déplace entre une première position où son extrémité recourbée 25 se trouve à l'écart de la portion de préhension 32 qui en est homologue. On peut engager mutuellement le couvercle 1 et le récipient 73 avec la portion de préhension 32 en regard d'une anse 81 du récipient, et une seconde position où son extrémité recourbée 25 est à proximité de la portion de préhension 32 pour engager l'anse 81 du récipient 73.

Le mode de réalisation du couvercle 1 que l'on vient de décrire ne l'a été qu'à titre d'exemple.

L'invention englobe toutes les variantes que pourra envisager la personne de l'art, pour autant qu'elles soient couvertes par la portée des revendications en annexe. En particulier :
- Le couvercle 1 peut prendre un contour quelconque, en correspondance du contour de l'ouverture de récipient 73, par exemple carré ou circulaire ;
- L'une des pattes 19 peut être montée fixe par rapport à l'embase 3, par exemple en première position, tandis que l'autre patte 19 est montée avec possibilité de translation comme décrit plus haut ;
- Les pattes 19 sont de préférence disposées de manière opposée sur l'embase 3, par exemple selon la longueur, la largeur ou le centre de celle-ci ;
- Les pattes 19 peuvent être disposées sur les grands côtés 30 du contour de l'embase et/ou décalées l'une de l'autre longitudinalement ou transversalement ;
- On peut prévoir plus de deux pattes 19 ;
- Le joint 29 pourrait ne pas dépasser de son logement 27, et l'on pourrait se passer d'évidement 35.
- la portion homologue 32 est conformée en partie au moins en une zone de préhension du couvercle 1 ;
- le curseur 19 comprend une patte munie d'organes de guidage aptes à coopérer avec des organes homologues prévus dans le couvercle 1 ;
- le couvercle 1 présente une échancrure 33 et lesdits organes homologues comprennent deux bords de cette échancrure 33 parallèles entre eux, et lesdits organes de guidage comprennent une paire de rainures latérales 51 ménagées dans ladite patte, chaque rainure latérale 51 étant agencée de manière à s'engager sur l'un des bords parallèles de l'échancrure 33 ;
- l'un au moins desdits bords parallèles de l'échancrure 33 présente une nervure 50 qui est reçue dans l'une de la paire de rainures latérales 51 ;
- les organes de guidage comprennent au moins une ailette 49 qui dépasse de la patte et les organes homologues comprennent au moins une rainure ménagée dans une épaisseur du couvercle 1 ;
- la portion en saillie 81 est conformée, en partie au moins, en tant qu'anse du récipient 73.

## Revendications

1. Ustensile de cuisine comprenant :
- un couvercle (1) en matière plastique en correspondance de forme avec un récipient (73) en verre ; et
- un système de fermeture capable de maintenir le couvercle (1) sur le récipient (73) en un engagement mutuel dans lequel une partie du couvercle (1) est en appui contre un bord libre (79) du récipient, le système de fermeture comprenant au moins une lèvre périphérique (7), solidaire du couvercle (1), qui est repliée, en partie au moins, contre une paroi latérale (77) du récipient (73) lorsque le couvercle (1) et le récipient (73) sont mutuellement engagés ;
- le couvercle (1) présentant au moins une portion homologue (32) d'au moins une portion (81) du récipient (73) qui fait saillie d'une partie au moins du bord libre (79), vers l'extérieur du récipient (73) ;
- le système de fermeture comprenant au moins un curseur (19) avec une extrémité recourbée (25), monté à translation sur le couvercle (1), le curseur (19) est déplaçable entre une première position où son extrémité recourbée (25) se trouve à l'écart de la portion homologue (32) du couvercle (1) pour permettre l'engagement du couvercle (1) et du récipient (73) avec la portion homologue (32) en regard de la portion en saillie (81) du récipient, et une seconde position où l'extrémité recourbée (25) du curseur (19) est à proximité de la portion homologue (32) pour engager la portion en saillie (81) du récipient (73).

2. Ustensile selon la revendication 1, dans lequel le couvercle (1) comporte au moins un orifice (37) et le curseur (19) porte au moins un joint d'étanchéité (29) adapté audit orifice (37), le joint d'étanchéité (29) et l'orifice (37) étant respectivement positionnés sur le curseur (19) et le couvercle (1) de manière telle que le joint d'étanchéité (29) obture l'orifice (37) lorsque le curseur (19) se trouve en seconde position.

3. Ustensile selon la revendication 2, dans lequel le joint d'étanchéité (29) et l'orifice (37) étant respectivement positionnés sur le curseur (19) et le couvercle (1) de manière telle que le joint d'étanchéité (29) se trouve à l'écart de l'orifice (37) lorsque le curseur (19) se trouve en première position.

4. Ustensile selon l'une des revendications 2 et 3, dans lequel le couvercle (1) présente un bossage qui entoure l'orifice (37), ce bossage étant conformé de manière à contraindre le joint d'étanchéité (29) contre l'orifice (37) lorsque le curseur (19) se trouve en première position.

5. Ustensile selon l'une des revendications précédentes, dans lequel ladite portion homologue (32) est conformée en partie au moins en une zone de préhension du couvercle (1).

6. Ustensile selon l'une des revendications précédentes, dans lequel le curseur (19) comprend une patte munie d'organes de guidage aptes à coopérer avec des organes homologues prévus dans le couvercle (1).

7. Ustensile selon la revendication 6, dans lequel le couvercle (1) présente une échancrure (33) et lesdits organes homologues comprennent deux bords de cette échancrure (33) parallèles entre eux, et lesdits organes de guidage comprennent une paire de rainures latérales (51) ménagées dans ladite patte, chaque rainure latérale (51) étant agencée de manière à s'engager sur l'un des bords parallèles de l'échancrure (33).

8. Ustensile selon la revendication 7, dans lequel l'un au moins desdits bords parallèles de l'échancrure (33) présente une nervure (50) qui est reçue dans l'une de la paire de rainures latérales (51).

9. Ustensile selon l'une des revendications 6 à 8, dans lequel lesdits organes de guidage comprennent au moins une ailette (49) qui dépasse de la patte et lesdits organes homologues comprennent au moins une rainure ménagée dans une épaisseur du couvercle (1).

10. Ustensile de cuisine selon l'une des revendications précédentes comprenant en outre le récipient (73) en verre.

11. Ustensile selon la revendication 10, dans lequel la portion en saillie (81) est conformée, en partie au moins, en tant qu'anse du récipient (73).

## Patentansprüche

1. Küchenwerkzeug, umfassend:
- einen Deckel (1) aus Kunststoff, der einer Form eines Behälters (73) aus Glas entspricht; und
- ein Verschlusssystem, das in der Lage ist, den Deckel (1) auf dem Behälter (73) in gegenseitigem Eingreifen zu halten, wobei ein Teil des Deckels (1) an einer freien Kante (79) des Behälters anliegt, wobei das Verschlusssystem mindestens eine umlaufende Lippe (7) umfasst, die fest mit dem Deckel (1) verbunden ist, die mindestens teilweise gegen eine Seitenwand (77) des Behälters (73) gefaltet ist, wenn der Deckel (1) und der Behälter (73) ineinander eingreifen;
- wobei der Deckel (1) mindestens einen Gegenelementsabschnitt (32) von mindestens einem Abschnitt (81) des Behälters (73) aufweist, der mindestens einen Teil der freien Kante (79) nach außen aus dem Behälter (73) vorsteht; und:
- wobei das Verschlusssystem mindestens einen Schieber (19) mit einem gebogenen Ende (25) umfasst, der translatorisch auf dem Deckel (1) montiert ist, der Schieber (19) zwischen einer ersten Position, in der sich sein gebogenes Ende (25) in einem Abstand von dem Gegenelementabschnitt (32) des Deckels (1) befindet, um den Eingriff des Deckels (1) und des Behälters (73) mit dem Gegenelementabschnitt (32) gegenüber dem vorstehenden Abschnitt (81) des Behälters zu ermöglichen, und einer zweiten Position verschiebbar ist, in der das gebogene Ende (25) des Schiebers (19) in der Nähe des Gegenelementabschnitts (32) ist, um in den vorstehenden Abschnitt (81) des Behälters (73) einzugreifen.

2. Werkzeug nach Anspruch 1, wobei der Deckel (1) mindestens eine Öffnung (37) aufweist und der Schieber (19) mindestens eine an diese Öffnung (37) angepasste Dichtung (29) trägt, wobei die Dichtung (29) und die Öffnung (37) jeweils so auf dem Schieber (19) und dem Deckel (1) positioniert sind, dass die Dichtung (29) die Öffnung (37) verschließt, wenn sich der Schieber (19) in der zweiten Position befindet.

3. Werkzeug nach Anspruch 2, wobei die Dichtung (29) und die Öffnung (37) jeweils so auf dem Schieber (19) und dem Deckel (1) positioniert sind, dass sich die Dichtung (29) von der Öffnung (37) entfernt befindet, wenn sich der Schieber (19) in der ersten Position befindet.

4. Werkzeug nach einem der Ansprüche 2 und 3, wobei der Deckel (1) eine Erhebung aufweist, die die Öffnung (37) umgibt, wobei diese Erhebung so ausgebildet ist, dass sie die Dichtung (29) gegen die Öffnung (37) drückt, wenn sich der Schieber (19) in der ersten Position befindet.

5. Werkzeug nach einem der vorhergehenden Ansprüche, wobei der Gegenelementabschnitt (32) mindestens teilweise in einem Griffbereich des Deckels (1) ausgebildet ist.

6. Werkzeug nach einem der vorhergehenden Ansprüche, wobei der Schieber (19) eine Lasche umfasst, die mit Führungselementen versehen ist, die mit Gegenelementen zusammenwirken können, die im Deckel (1) vorgesehen sind.

7. Werkzeug nach Anspruch 6, wobei der Deckel (1) eine Aussparung (33) aufweist und die Gegenelemente zwei zueinander parallele Kanten dieser Aussparung (33) umfassen, und die Führungselemente ein Paar seitlicher Nuten (51) umfassen, die in der Lasche vorgesehen sind, wobei jede seitliche Nut (51) so angeordnet ist, dass sie in eine der parallelen Kanten der Aussparung (33) eingreift.

8. Werkzeug nach Anspruch 7, wobei mindestens eine der parallelen Kanten der Aussparung (33) eine Rippe (50) aufweist, die in einem des Paares seitlicher Nuten (51) aufgenommen wird.

9. Werkzeug nach einem der Ansprüche 6 bis 8, wobei die Führungselemente mindestens einen Flügel (49) umfassen, der aus der Lasche herausragt, und die Gegenelemente mindestens eine in einer Dicke des Deckels (1) vorgesehene Nut umfassen.

10. Küchenwerkzeug nach einem der vorhergehenden Ansprüche, der ferner den Behälter (73) aus Glas umfasst.

11. Werkzeug nach Anspruch 10, wobei der vorstehende Abschnitt (81) mindestens teilweise als Bügel des Behälters (73) ausgebildet ist.

## Claims

1. Kitchen utensil comprising:
- a plastic cover (1) whose shape matches that of a glass container (73); and
- a closure system capable of holding the cover (1) on the container (73) in mutual engagement wherein part of the cover (1) bears against a free edge (79) of the container, the closure system comprising at least one peripheral lip (7), integral with the cover (1), which is folded, in part at least, against a side wall (77) of the container (73) when the cover (1) and the container (73) are mutually engaged;
- the cover (1) having at least one counterpart portion (32) of at least one portion (81) of the container (73) which protrudes from at least part of the free edge (79) to the outside of the container (73); and:
- the closure system comprising at least one slider (19) with a curved end (25), mounted for translational movement on the cover (1), the slider (19) is movable between a first position where its curved end (25) is spaced apart from the counterpart portion (32) of the cover (1) to allow engagement of the cover (1) and the container (73) with the counterpart portion (32) facing the protruding portion (81) of the container, and a second position where the curved end (25) of the slider (19) is near the counterpart portion (32) to engage the protruding portion (81) of the container (73).

2. Utensil according to Claim 1, wherein the cover (1) includes at least one opening (37) and the slider (19) carries at least one seal (29) adapted to said opening (37), the seal (29) and the opening (37) being positioned respectively on the slider (19) and the cover (1) such that the seal (29) closes the opening (37) when the slider (19) is in the second position.

3. Utensil according to Claim 2, wherein the seal (29) and the opening (37) are positioned respectively on the slider (19) and the cover (1) such that the seal (29) is spaced apart from the opening (37) when the slider (19) is in the first position.

4. Utensil according to either one of Claims 2 or 3, wherein the cover (1) has a boss that surrounds the opening (37), this boss being shaped so as to force the seal (29) against the opening (37) when the slider (19) is in the first position.

5. Utensil according to one of the preceding claims, wherein said counterpart portion (32) is at least partly shaped as a gripping area for the cover (1).

6. Utensil according to one of the preceding claims, wherein the slider (19) comprises a tab provided with guide members able to cooperate with counterpart members provided in the cover (1).

7. Utensil according to Claim 6, wherein the cover (1) has a notch (33) and said counterpart members comprise two edges of this notch (33) parallel to each other, and said guide members comprise a pair of lateral grooves (51) provided in said tab, each lateral groove (51) being arranged so as to engage on one of the parallel edges of the notch (33).

8. Utensil according to Claim 7, wherein at least one of said parallel edges of the notch (33) has a rib (50) that is received in one of the pair of lateral grooves (51).

9. Utensil according to one of Claims 6 to 8, wherein said guide members comprise at least one fin (49) protruding from the tab and said counterpart members comprise at least one groove provided in a thickness of the cover (1).

10. Kitchen utensil according to one of the preceding claims further comprising the glass container (73).

11. Utensil according to Claim 10, wherein the protruding portion (81) is shaped, in part at least, as a handle of the container (73).
